(19) Europäisches Patentamt
European Patent Office
Office européen des brevets

(11) **EP 3 193 339 B1**

(12) **EUROPEAN PATENT SPECIFICATION**

(45) Date of publication and mention of the grant of the patent:
**19.05.2021 Bulletin 2021/20**

(51) Int Cl.:
*C09D 179/08* *(2006.01)*    *H01B 3/30* *(2006.01)*
*H01B 13/14* *(2006.01)*    *H01F 5/06* *(2006.01)*
*H01B 7/02* *(2006.01)*    *H01B 3/42* *(2006.01)*
*H01B 13/00* *(2006.01)*    *C08L 67/02* *(2006.01)*
*C08L 81/06* *(2006.01)*

(21) Application number: **15840408.7**

(22) Date of filing: **08.09.2015**

(86) International application number:
**PCT/JP2015/075500**

(87) International publication number:
**WO 2016/039350 (17.03.2016 Gazette 2016/11)**

(54) **INSULATED ELECTRIC WIRE, COIL, ELECTRIC/ELECTRONIC DEVICE, AND METHOD FOR MANUFACTURING INSULATED ELECTRIC WIRE**

ELEKTROISOLIERDRAHT, SPULE, ELEKTRISCHE/ELEKTRONISCHE VORRICHTUNG UND VERFAHREN ZUR HERSTELLUNG EINES ELEKTROISOLIERDRAHTS

FIL ÉLECTRIQUE ISOLÉ, BOBINE, DISPOSITIF ÉLECTRIQUE/ÉLECTRONIQUE ET PROCÉDÉ DE FABRICATION DE FIL ÉLECTRIQUE ISOLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2014 JP 2014183637**

(43) Date of publication of application:
**19.07.2017 Bulletin 2017/29**

(73) Proprietor: **Essex Furukawa Magnet Wire Japan Co., Ltd.**
**Tokyo 101-0047 (JP)**

(72) Inventors:
• **SAITO, Takeshi**
**Tokyo 100-8322 (JP)**
• **IKEDA, Keisuke**
**Tokyo 100-8322 (JP)**
• **FUKUDA, Hideo**
**Tokyo 100-8322 (JP)**

(74) Representative: **Forstmeyer, Dietmar**
**BOETERS & LIECK**
**Oberanger 32**
**80331 München (DE)**

(56) References cited:
WO-A1-2014/122828    JP-A- H05 225 832
JP-B1- 5 391 341    JP-U- H0 362 414
US-A1- 2010 144 955

**Description**

TECHNICAL FIELD

The present invention relates to an insulated wire, a coil, and an electrical or electronic equipment, and a method of producing the insulated wire.

BACKGROUND ART

In a recent electric or electronic equipment (electric or electronic device) (also referred to as electrical equipment), in order to prevent deterioration (inverter surge deterioration) caused by a surge voltage generated by switching of inverter elements, such an insulated wire (wire) that can withstand a surge voltage having several hundred volts has been required in several cases (see Patent Literature 1). For example, such a product in which a partial discharge inception voltage (PDIV) in the insulated wire is 500 V or more is actually produced and handled in the market. Herein, PDIV means a voltage at which, when the voltage is applied between electrodes, discharge partially occurs in an insulator therebetween, and the voltage can be measured by a commercially available device called a partial discharge tester. A measuring temperature, a frequency of an AC voltage to be applied, measurement sensitivity and the like are varied as required, but a value ordinarily to be used adopts the voltage at which partial discharge occurs upon measurement at 25°C, 50 Hz and 10 pC, for example.

It is known that relative permittivity of an electrical wire coating significantly influences PDIV of the insulated wire, and for the purpose of improving PDIV characteristics, proposals have been made on using a resin having low relative permittivity for the electrical wire coating (see Patent Literatures 2 to 4).

On the other hand, advance of the electrical equipment represented by motors or transformers, has been progressed resulting in size reduction and improved performance. Thus, it becomes usual in many cases that insulated wires are used in such a way that the insulated wires are processed by winding (also referred to as coil processing or bending) to winding the resultant wound wires (coils) and they are pushed into a quite small space to pack. Specifically, it is no exaggeration to say that the performance of a rotating electric machine, such as a motor, is determined by how many coils produced by coil processing the insulated wires into a coil shape can be held in a stator slot. As a result, improvement of the ratio of the sectional area of conductors to the sectional area of the stator slot (i.e. the space factor) has been required to be increased. For the reasons discussed above, as a means for increasing the space factor, it has been lately attempted to use a rectangular wire in which the conductor has a cross-sectional shape similar to a quadrilateral (square or rectangle).

CITATION LIST

PATENT LITERATURES

Patent Literature 1: Japanese Patent No. 5391324
Patent Literature 2: JP-A-2013-109874 ("JP-A" means unexamined published Japanese patent application)
Patent Literature 3: WO 2013/088968 A
Patent Literature 4: WO 2014/122828 A1

SUMMARY OF INVENTION

TECHNICAL PROBLEM

When an electric current passes through an insulated wire assembled into electrical equipment, the insulated wire reaches a high temperature by heat generated. In the electrical equipment to be used in automobiles and the like, size reduction and high output have been achieved year after year, and in association therewith, a high temperature inside the equipment is caused to such a temperature over 200°C in several cases. Under such a high temperature, a covering resin layer of the insulated wire to be used in the equipment is thermally deteriorated to cause thermal shrinkage. This thermal shrinkage is particularly significantly caused in the insulated wire to be used in the electrical equipment in which a space factor is improved. When the thermal shrinkage of the covering resin layer is increased, the covering resin layer cannot withstand a thermal shrinkage stress, and cracking is caused.

Accordingly, the present invention is contemplated for providing an insulated wire, in which a partial discharge inception voltage (PDIV) of the insulated wire is improved, and even at such a high temperature over 200°C, mechanical properties are excellent, and thermal deterioration is suppressed; a coil using the same; and an electric or electronic equipment using the same.

Further, the present invention is contemplated for providing a method of producing the insulated wire as being excellent in above.

SOLUTION TO PROBLEM

The inventors of the present invention studied, in various manners, characteristics of an insulated wire under a high temperature environment in assumption of an inside of a device in which the insulated wire is used, particularly under an environment at 200°C, which may actually occur.

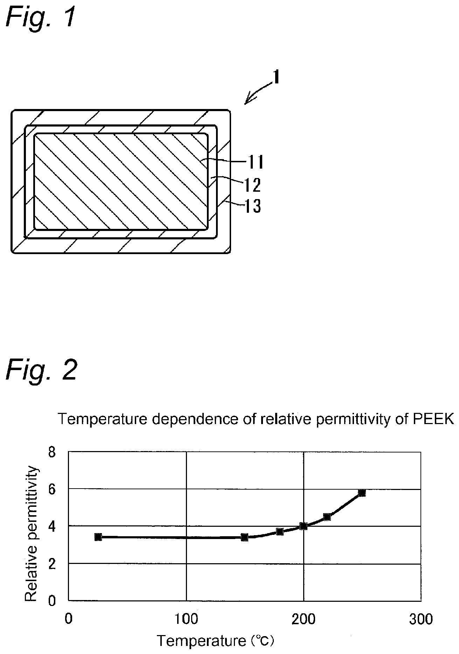

In particular, the inventors of the present invention investigated temperature dependence of relative permittivity of a resin to be used in an extrusion covering resin layer, and as a result, found that the relative permittivity significantly rises near 200°C more than expected. This rate of rise is particularly large in a polyallyletherketone resin. For example, in polyetheretherketone, as shown in Fig. 2, the relative permittivity is 3.2 at 25°C, but 4.5 at 200°C to be higher 1.4 times the level of 3.2. As a result, the inventors of the present invention found that a partial discharge inception voltage (PDIV) at 200°C is lowered by a level close to 30% relative to the partial discharge inception voltage (PDIV) at 25°C. This lowering of the partial discharge inception voltage under as high temperature significantly reduces a safety factor in design against inverter surge deterioration. Moreover, a further increase in a thickness of a coating of the insulated wire in order to suppress lowering of the partial discharge inception voltage at a high temperature eventually leads to an increase in size of electrical equipment.

Therefore, the inventors of the present invention further conducted study based on these findings, and completed the present invention.

That is, the present invention provides the following means:

(1) An insulated wire, comprising at least one layer of an electrical wire coating, including an extrusion covering resin layer, on an outer periphery of a conductor, wherein the extrusion covering resin layer is composed of a mixed resin of a resin (A) and a resin (B) each having different relative permittivity, the resin (A) is a polyallyletherketone resin including at least one resin selected from polyetheretherketone, polyetherketoneketone, polyetherketone, polyetheretherketoneketone, polyetherketoneetherketoneketone, and polyketone, the resin (B) is a non-fluorine-based resin including at least one resin selected from polycarbonate, polyphenylsulfone, and polyethersulfone; and having lower relative permittivity at 200°C, than the resin (A), a mixing mass ratio of the mixed resin (a mass of the resin (A):a mass of the resin (B)) is 90:10 to 51:49, and a value of a ratio of the relative permittivity at 200°C to the relative permittivity at 25°C and 50% relative humidity, in the relative permittivity of a whole of the electrical wire coating, is less than 1.20.
(2) The insulated wire described in the above item (1), wherein percent elongation at breakage of a resin(s) in the extrusion covering resin layer is 50% or more.
(3) The insulated wire described in any one of the above items (1) or (2), wherein the electrical wire coating comprises a thermosetting resin layer including at least one resin selected from polyimide, polyamideimide, polyesterimide, polyetherimide, and H-class polyester.
(4) A coil, wherein the insulated wire described in any one of the above items (1) to (3) is subjected to winding working.
(5) An electric or electronic equipment, using the coil described in the above item (4).
(6) A method of producing an insulated wire, comprising at least one layer of an electrical wire coating, including an extrusion covering resin layer, on an outer periphery of a conductor, wherein the extrusion covering resin layer is composed of a mixed resin of a resin (A) and a resin (B) each having different relative permittivity, the resin (A) is a polyallyletherketone resin including at least one resin selected from polyetheretherketone, polyetherketoneketone, polyetherketone, polyetheretherketoneketone, polyetherketoneetherketoneketone, and polyketone, the resin (B) is a non-fluorine-based resin including at least one resin selected from polycarbonate, polyphenylsulfone, and polyethersulfone; and having lower relative permittivity at 200°C, than the resin (A), a mixing mass ratio of the mixed resin (a mass of the resin (A):a mass of the resin (B)) is 90:10 to 51:49, and a value of a ratio of the relative permittivity at 200°C to the relative permittivity at 25°C and 50% relative humidity, in the relative permittivity of a whole of the electrical wire coating, is less than 1.20, wherein the method comprises: a step of extruding a resin composition, including the mixed resin, on an outer periphery of the conductor, to form the extrusion covering resin layer.
(7) The method of producing the insulated wire described in the above item (6), wherein percent elongation at breakage of a resin(s) in the extrusion covering resin layer is 50% or more.

(8) The method of producing the insulated wire described in any one of the above items (6) or (7), comprising: a step of forming a thermosetting resin layer including at least one resin selected from polyimide, polyamideimide, polyesterimide, polyetherimide, and H-class polyester, on an outer periphery of the conductor.

ADVANTAGEOUS EFFECTS OF INVENTION

According to the present invention, there can be provided: an insulated wire, in which a partial discharge inception voltage (PDIV) of the insulated wire at a high temperature can be improved, to suppress inverter surge deterioration, in which mechanical properties thereof are excellent, even at such a high temperature over 200°C, and in which thermal deterioration is suppressed; a coil using the same; and an electric or electronic equipment using the same.

Moreover, according to the present invention, there can be provided: a method of producing an insulated wire having an improved partial discharge inception voltage (PDIV) of the insulated wire at a high temperature, and simultaneously excellent performance as described above.

Other and further features and advantages of the invention will appear more fully from the following description, appropriately referring to the accompanying drawings.

BRIEF DESCRIPTION OF THE DRAWINGS

{Fig. 1}
Fig. 1 is a schematic cross-sectional view showing a preferred embodiment of the insulated wire of the present invention.
{Fig. 2}
Fig. 2 is a graph showing temperature dependence of relative permittivity of polyetheretherketone.
{Fig. 3}
Fig. 3 is a schematic diagram of a measuring device of a partial discharge inception voltage (PDIV).

MODE FOR CARRYING OUT THE INVENTION

<<Insulated wire>>

An insulated wire of the present invention has: a conductor; and at least one layer of an electrical wire coating, including an extrusion covering resin layer, on an outer periphery of the conductor.

Herein, Fig. 1 schematically shows a cross-sectional view of an insulated wire 1 according to a preferred embodiment of the present invention. Herein, the insulated wire is shown in which an electrical wire coating is formed on an outer periphery of a conductor 11, and this electrical wire coating is composed of a two-layered structure in which a thermosetting resin layer 12 in contact with the conductor, and an extrusion covering resin layer 13 are laminated. In the present invention, the insulated wire has the extrusion covering resin layer 13 as an essential layer, and has the thermosetting resin layer 12, which is a particularly preferred embodiment in the present invention.

A total thickness of the electrical wire coating (a total of thicknesses of all insulation layers: the total thickness from the conductor to a surface of the layer) in a cross section perpendicular to a longitudinal direction of the insulated wire of the present invention, is preferably 50 to 300 $\mu$m, and more preferably 50 to 200 $\mu$m.

Hereinafter, the conductor, the extrusion covering resin layer, and the insulation layer other than the extrusion covering resin layer will be described in the order.

<Conductor>

As the conductor that can be used in the present invention, use may be made of any conductor that is usually used in insulated wires, and examples thereof include a metal conductor, such as a copper wire and an aluminum wire. The conductor is a conductor of preferably a low-oxygen copper whose oxygen content is 30 ppm or less, and more preferably a low-oxygen copper whose oxygen content is 20 ppm or less or an oxygen-free copper. When the conductor is melted by heat for the purpose of welding if the oxygen content is 30 ppm or less, voids caused by contained oxygen are not occurred at a welded portion, the deterioration of the electrical resistance of the welded portion can be prevented, and the strength of the welded portion can be secured.

A conductor that can be used in the present invention is the conductor whose cross-sectional shape may be any of round (circular), quadrilateral (rectangular), or hexagonal. The rectangular conductor has higher space factor of the conductor with respect to the stator slot at the time of winding, compared to a round conductor, which is preferable.

The size (cross-sectional shape) of the rectangular conductor is not particularly limited, but the width (long side) thereof is preferably from 1 to 5 mm, and more preferably from 1.4 to 4.0 mm, and the thickness (short side) is preferably from 0.4 to 3.0 mm, and more preferably from 0.5 to 2.5 mm. The ratio of length of the width (long side) and the thickness (short side), the ratio of thickness:width, is preferably from 1:1 to 1:4.

Further, the rectangular conductor has preferably such a shape that chamfered corners (curvature radius r) are provided at four corners. The curvature radius r is preferably 0.6 mm or less and more preferably in a range from 0.2 to 0.4 mm.

In the case of the conductor in which the cross section is round, a size (cross-sectional shape) is not particularly limited, but a diameter is preferably 0.3 to 3.0 mm, and more preferably 0.4 to 2.7 mm.

<Extrusion covering resin layer>

The extrusion covering resin layer is the insulation layer arranged on the outer periphery of the conductor by performing extruding of a resin or a resin composition thereon. Therefore, the resin which forms the extrusion covering resin layer is an extrusion-moldable thermoplastic resin.

The extrusion covering resin layer may be arranged in contact with the conductor on the outer periphery of the conductor, or may be arranged on other insulation layer(s), for example, outside the thermosetting resin layer.

Moreover, the extrusion covering resin layer may be in one layer or a plurality of layers.

In the insulated wire of the present invention, the extrusion covering resin layer is composed of a mixed resin of a resin (A) and a resin (B) each having different relative permittivity.

(Relative permittivity)

In view of capability of further raising a partial discharge inception voltage, with regard to the thermoplastic resin which constitutes the extrusion covering resin layer, the relative permittivity at room temperature (25°C) and 50% relative humidity is preferably 4.5 or less, and more preferably 4.0 or less. In the present invention, in addition thereto, the relative permittivity at 200°C is preferably 4.5 or less, and more preferably 4.0 or less.

In addition, a lower limit of the relative permittivity is not particularly restricted, but the lower limit of the relative permittivity at 25°C and 50% relative humidity is practically preferably 1.5 or more, and more preferably 2.0 or more. Moreover, a lower limit of the relative permittivity at 200°C is practically preferably 1.5 or more, and more preferably 2.0 or more.

Moreover, in view of capability of further improving the partial discharge inception voltage at a high temperature, with regard to the relative permittivity obtained by measuring a whole of the electrical wire coating including the extrusion covering resin layer upon molding the resin into the insulated wire, a value of a ratio of the relative permittivity at 200°C to the relative permittivity at 25°C (room temperature) and 50% relative humidity is less than 1.20.

The above-described value of the ratio of the relative permittivity is preferably 1.15 or less, and more preferably 1.10 or less. Moreover, a lower limit of the value of the ratio of the relative permittivity is not particularly restricted, but is practically preferably over 0.9.

The relative permittivity can be measured by a permittivity measuring device, and is expressed in terms of a value measured at a frequency of 50 Hz at 25°C and 50% relative humidity, or at a frequency of 50 Hz at 200°C.

Moreover, the relative permittivity at 25°C and at 200°C each is measured by using the insulated wire which is allowed to stand in dry air at 25°C for 24 hours or more, putting the insulated wires in thermostatic baths each set to 25°C (50% relative humidity) and 200°C in measurement temperatures, and at a time point when a constant temperature is maintained.

The relative permittivity of each of the resin (A) and the resin (B) to be used in the extrusion covering resin layer can be measured as described below.

Each single resin is molded into a sheet form by a heat press machine, and measured in accordance with JIS C 2138: 2007.

Meanwhile, the relative permittivity at 25°C and 200°C each in the whole of the electrical wire coating including the extrusion covering resin layer which is molded into the insulated wire, is measured as described below.

First, electrostatic capacitance of the insulated wire is measured at 25°C and 200°C, by using LCR HiTester (for example, model: 3532-50, manufactured by Hioki E.E. Corporation). The relative permittivity is calculated from the electrostatic capacitance obtained and an outside diameter of the conductor and the insulated wire each based on the following formula.

$$\varepsilon r = Cp \cdot Log(b/a)/(2\pi\varepsilon_0)$$

Herein, εr denotes relative permittivity of a whole of an electrical wire coating, Cp denotes electrostatic capacitance [pF/m] per unit length, a denotes an outside diameter of a conductor, b denotes an outside diameter of an insulated wire, and $\varepsilon_0$ denotes permittivity ($8.855 \times 10^{-12}$ [F/m]) in vacuum, respectively.

When the cross section of the insulated wire is rectangular, Cp can be determined as described below.

In addition, this method utilizes a principle in which the electrostatic capacitance Cp of the whole of the electrical wire coating is a composition (Cp = Cf + Ce) of electrostatic capacitance Cf in a flat part and electrostatic capacitance Ce in a corner part.

Specifically, if lengths of a long side and a short side in a linear part of the conductor are taken as L1 and L2, respectively, a curvature radius of a conductor corner is taken as R, and a thickness of the whole of the electrical wire coating is taken as T, the electrostatic capacitance Cf in the flat part and the electrostatic capacitance Ce in the corner part are represented by the following formulas, respectively. From the following formulas, and actually measured electrostatic capacitance of the insulated wire, and the electrostatic capacitance of the whole of the electrical wire coating: Cp = (Cf + Ce), εr can be calculated in a similar manner to the case where the cross section of the conductor is round.

$$Cf = (\varepsilon r/\varepsilon_0) \times 2 \times (L1+L2)/T$$

$$Ce = (\varepsilon r/\varepsilon_0) \times 2\pi\varepsilon_0/Log\{(R+T)/R\}$$

Herein, the relative permittivity at 25°C and at 200°C each is measured by using the insulated wire which is allowed to stand in dry air at 25°C for 24 hours or more, putting the insulated wires in thermostatic baths each set to 25°C and 200°C in measurement temperatures, and at the time point when the constant temperatures are maintained.

The resin (A) is a polyallyletherketone (PAEK) resin including at least one resin selected from polyetheretherketone (PEEK), polyetherketoneketone (PEKK), polyetherketone (PEK), polyetheretherketoneketone (PEEKK), polyetherketoneetherketoneketone (PEKEKK), and polyketone (PK).

In the present invention, these resins also include a modified one. For example, modified polyetheretherketone (m-PEEK) is included in PEEK.

Among these, as the resin (A), PEEK, modified PEEK, or PEK is more preferable, PEEK or modified PEEK is further preferable, and PEEK is particularly preferable.

In addition, the relative permittivity each of these resins at 25°C and 200°C is 3.2 at 25°C and 4.5 at 200°C for PEEK, 3.3 at 25°C and 3.8 at 200°C for m-PEEK, and 3.3 at 25°C and 4.0 at 200°C for PEK.

Among these, specific examples include, as PEEK, a commercially available product, such as KetaSpire KT-820, KT-880 (trade names, both manufactured by Solvay Specialty Polymers Japan K.K.), and PEEK 450G (trade name, manufactured by Victrex Japan Inc.); as modified PEEK, a commercially available product, such as AvaSpire AV-650, AV-651 (trade names, both manufactured by Solvay Specialty Polymers Japan K.K.); as PEKK, a commercially available product, such as Super Engineering Plastic PEKK (trade name, manufactured by Arkema K.K.); as PEK, a commercially available product, such as HT-G22 (trade name, manufactured by Victrex Japan Inc.); and as PEKEKK, a commercially available product, such as ST-STG45 (trade name, manufactured by Victrex Japan Inc.).

The resin (B) is a non-fluorine-based resin having lower relative permittivity at 200°C, than the resin (A).

By simultaneously using the resin (B), the relative permittivity at 200°C of the whole of the extrusion covering resin layer can be lowered, and also reduction of percent elongation at breakage of the extrusion covering resin layer and reduction of chemical resistance can be suppressed, as described later.

Specific examples of the resin (B) include: engineering plastics, such as polycarbonate (PC), thermoplastic polyimide (TPI), polyphenylsulfone (PPSU), polyethersulfone (PES), polyetherimide (PEI), syndiotactic polystyrene (SPS), polybutylene terephthalate (PBT), polyamide (PA), polyacetal (POM), polyphenylene ether (PPE), polysulfone (PSU), polyarylate (PAR), polyamideimide (PAI), and a liquid crystal polymer (LCP); and a copolymer thereof or a mixture thereof.

The resin (B) according to the invention is a resin including at least one resin selected from PC, PPSU and PES.

Among these, specific examples include: as PC, a commercially available product, such as CALIBRE 300-10 (trade name, manufactured by Sumika Styron Polycarbonate Limited); as PPSU, a commercially available product, such as Radel R-5800 (trade name, manufactured by Solvay Specialty Polymers Japan K.K.); and as PES, a commercially available product, such as Sumikaexcel 4100G (trade name, manufactured by Sumitomo Chemical Co., Ltd.).

The typical relative permittivity at 200°C in each of these resins is 3.0 for PC, 3.1 for TPI, 3.6 for PPSU, and 3.5 for PES.

In the present invention, the mixing mass ratio of the resin (A) to the resin (B) (a mass of resin (A):a mass of resin (B)) is 90:10 to 51:49.

The above-described mass ratio is preferably 85:15 to 60:40, and more preferably 80:20 to 65:35.

The relative permittivity at 200°C can be lowered, by adjusting the mixing mass ratio of the resin (A) to the resin (B) to the above-described range, while suppressing reduction of the percent elongation at breakage and reduction of chemical resistance upon using the mixed resin as the electrical wire coating. As a result, the present invention can provide the insulated wire preferable for electrical equipment to be used under a high temperature environment.

To the extrusion covering resin layer to be used in the present invention, addition may be made of a raw material other than the resin similar to the thermosetting resin layer described later.

The percent elongation at breakage of the mixed resin which constitutes the extrusion covering resin layer to be used in the present invention, is preferably 50% or more, and more preferably 100% or more. In addition, an upper limit is not particularly limited, but is practically 500% or less.

The percent elongation at breakage of the mixed resin to be used in the extrusion covering resin layer, is measured as described below.

First, a test specimen is prepared, by performing compression molding of the mixed resin to be used into a thickness of 0.15 mm by a hot press machine, and punching the sheet obtained into a dumbbell piece (IEC-S type). A tensile test is conducted on this test specimen at a tensile speed of 20 m/min, by using a tensile tester (for example, trade name: AGS-J, manufactured by Shimadzu Corporation). An average value of the percent elongation at breakage between gauge marks is measured, in a test in which the number of tests is 5 (n=5), by adjusting a gauge length to 20 mm.

A thickness of the extrusion covering resin layer is preferably 250 $\mu$m or less, and more preferably 180 $\mu$m or less. If the thickness of the extrusion covering resin layer is excessively large, the extrusion covering resin layer itself has stiffness, and therefore such a material becomes poor in flexibility as the insulated wire, to affect, in several cases, a change in characteristics maintaining the electrical insulation before and after working. On the other hand, when the cross section of the conductor is round, in view of capability of preventing poor insulation, the thickness of the extrusion covering resin layer is preferably 5 $\mu$m or more, and more preferably 15 $\mu$m or more. In this preferred embodiment, when the conductor is rectangular, all of the thicknesses of the extrusion covering resin layers arranged on first facing two sides and second corresponding two sides among four sides of a rectangle are each preferably 200 $\mu$m or less.

(Method of forming the extrusion covering resin layer)

On the conductor or an outer peripheral surface of the conductor (also referred to as an enameled wire) on which the thermosetting resin layer is formed, the mixed resin of the resin (A) and the resin (B) to be used in the extrusion covering resin layer, by using a co-extruder, or each resin thereof, is simultaneously extruded, to form the extrusion covering resin layer. The mixed resin is formed into a melted state at a temperature higher than a glass transition temperature of the resin, and is extruded onto the conductor or the enameled wire, and brought into contact therewith. In the case of the enameled wire having the thermosetting resin layer, the extrusion covering resin is thermally bonded onto the thermosetting resin layer, to form the extrusion covering resin layer.

In addition, the thermoplastic resin layer (for example, the extrusion covering resin layer composed of the mixed resin to be used in the present invention), can also be formed, by using an organic solvent or the like and a thermoplastic resin.

A screw of an extruder is not particularly limited, and specific examples thereof include: a 30 mm full-flight screw, in which L/D = 20 and a compression ratio is 3. With regard to extrusion temperature conditions, it is preferable to divide a cylinder into at least 3 zones, C1, C2, and C3, sequentially from a raw material-resin charging side, to adjust each temperature of the cylinder in the extruder, and temperatures of a head part (H) and a die part (D) are further adjusted. A temperature of the C1 zone is preferably 290 to 310°C, a temperature of the C2 zone is preferably 370 to 380°C, and a temperature of the C3 zone is preferably 380 to 390°C. Moreover, a temperature of the head part (H) is preferably 380 to 400°C, and a temperature of the die part (D) is preferably 380 to 400°C. As the extrusion die, use may be made of: a die analogue to the conductor and capable of obtaining the required thickness. After the above-described resin is extruded and covered, and then water-cooled.

In the present invention, relative crystallinity indicates a relative ratio when a maximum value of theoretically attainable crystallinity is taken as 100%. The relative crystallinity of the thermoplastic resin layer is calculated by the following formula, based on a melting heat quantity and a crystallization heat quantity both measured by differential scanning calorimetry (DSC).

$$\text{(Relative crystallinity)} = \{(\text{melting heat quantity - crystallization heat quantity})/(\text{melting heat quantity})\} \times 100 \ (\%)$$

However, the melting heat quantity is a melting endothermic quantity (J/g) in DSC measurement, and the crystallization heat quantity is a recrystallization exothermic quantity (J/g) in DSC measurement.

<Thermosetting resin layer>

In the insulated wire of the present invention, other insulation layers may be arranged as the electrical wire coating, in addition to the above-described extrusion covering resin layer.

In the present invention, among other insulation layers, a thermosetting resin layer (also referred to as an enameled layer in this case) is preferably arranged for improving adhesion between the conductor and the extrusion covering resin layer, particularly preferably arranged between the conductor and the extrusion covering resin layer.

As the thermosetting resin layer, at least one layer is preferably arranged in an enamel resin, but a plurality of layers may be arranged therein. In addition, one layer of the thermosetting resin layer means inclusion of a layer prepared by repeatedly baking the same varnish in order to increase the thickness thereof, and the layer formed by different varnish is counted as another layer.

As the enamel resin for forming the thermosetting resin layer, a conventionally used one can be used. Specific examples thereof include: polyimide (PI), polyamideimide (PAI), polyesterimide (PEsI), polyetherimide (PEI), polyimide hydantoin-modified polyester, polyamide (PA), formal, polyurethane (PU), polyester (PE), polyvinylformal, epoxy, and polyhydantoin. Among these, a polyimide resin having excellent heat resistance, such as polyimide (PI), polyamideimide (PAI), polyesterimide (PEsI), polyetherimide (PEI), polyimide hydantoin-modified polyester; and H-class polyester (HPE), is preferable.

In the present invention, a resin selected from polyimide (PI), polyamideimide (PAI), polyesterimide (PEsI), polyetherimide (PEI), and H-class polyester (HPE), is particularly preferable.

The polyimide is not particularly restricted, and use may be made of: conventional polyimide, such as wholly aromatic polyimide and thermosetting aromatic polyimide. For example, use may be made of: a commercially available product (trade name: HI 406, manufactured by Hitachi Chemical Co., Ltd.); or one prepared, by using a polyamic acid solution obtained by allowing aromatic tetracarboxylic dianhydride to react with aromatic diamine in a polar solvent in a usual manner, forming polyimide by heat treatment in baking upon covering.

The polyamideimide only needs be a thermosetting resin, and use may be made of: a commercially available product (for example, trade name: U imide (manufactured by Unitika Ltd.), trade name: U-Varnish (manufactured by Ube Industries, Ltd.), or trade names: HCI series (manufactured by Hitachi Chemical Company, Ltd.); or use may be made of: each in a usual manner, for example, one obtained by allowing tricarboxylic anhydride to directly react with diisocyanate in a polar solvent, or one obtained by first allowing tricarboxylic anhydride to react with diamine in a polar solvent to introduce imide bond thereinto, and then forming amide by diisocyanate. In addition, the polyamideimide has a lower thermal conductivity and a higher dielectric breakdown voltage, in comparison with other resins, and is able to be cured by being baked.

The polyesterimide only needs be a polymer having an ester bond and an imide bond in a molecule, and which is a thermosetting polymer. For example, use may be made of: a commercially available product, such as Neoheat 8600A (trade name, manufactured by Totoku Toryo Co., Ltd.).

Moreover, the polyesterimide is not particularly limited. For example, use may be made of: one, obtained by forming the imide bond from tricarboxylic anhydride and amine, forming the ester bond from alcohol and carboxylic acid or alkyl ester thereof, and then joining of a free acid group or an anhydride group of the imide bond in an ester-forming reaction. As such a polyesterimide, use may be also made of: one, obtained by allowing, for example, tricarboxylic anhydride, dicarboxylic acid compound or alkyl ester thereof to react with alcohol compound and diamine compound in a known method.

Specific examples of the polyetherimide include: a commercially available product of ULTEM 1010 (trade name, manufactured by SABIC Innovative Plastics Holding BV).

The H-class polyester (HPE) means one prepared by modifying the resin by adding a phenolic resin or the like among aromatic polyesters, in which a thermal resistance class thereof is H-class. Specific examples of a commercially available H-class polyester include: Isonel 200 (trade name, manufactured by Schenectady International Inc., in the U.S.A.).

In the enamel resin, one kind thereof may be used alone, or two or more kinds thereof may be mixed and used.

In view of capability of reducing the number of times of passing the wire through a baking furnace upon forming the enameled layer, and preventing excessive reduction of bonding force between the conductor and a thickness of the thermosetting resin layer is preferably 60 $\mu$m or less, and more preferably 50 $\mu$m or less,. Moreover, in order to prevent damage on withstand voltage characteristics or heat resistance characteristics, which are properties required for the enameled wire as the insulated wire, it is preferable that the thermosetting resin layer has a thickness of a certain degree. A lower limit of the thickness of the thermosetting resin layer is not particularly limited, as long as it is a thickness at which no pinholes are formed, and is preferably 3 $\mu$m or more, and more preferably 6 $\mu$m or more. When the conductor is rectangular, all of the thicknesses of the thermosetting resin layers arranged on first facing two sides and second corresponding two sides in four sides of the rectangle are each preferably 60 $\mu$m or less.

The thermosetting resin layer can be preferably formed by applying and baking resin varnish containing the above-mentioned enamel resin on the conductor a plurality of times.

The resin varnish contains an organic solvent and the like so as to make the thermosetting resin be a varnish. The organic solvent is not particularly limited as long as the organic solvent does not inhibit the reaction of the thermosetting resin, and examples thereof include: amide-based solvents, such as N-methyl-2-pyrrolidone (NMP), N,N-dimethylacetamide (DMAC), and N,N-dimethylformamide (DMF); urea-based solvents, such as N,N-dimethylethyleneurea, N,N-dimethylpropyleneurea, and tetramethylurea; lactone-based solvents, such as γ-butyrolactone and γ-caprolactone; carbonate-based solvents, such as propylene carbonate; ketone-based solvents, such as methyl ethyl ketone, methyl isobutyl ketone, and cyclohexanone; ester-based solvents, such as ethyl acetate, n-butyl acetate, butyl cellosolve acetate, butyl carbitol acetate, ethyl cellosolve acetate, and ethyl carbitol acetate; glyme-based solvents, such as diglyme, triglyme, and tetraglyme; hydrocarbon-based solvents, such as toluene, xylene, and cyclohexane; phenol-based solvents, such as cresol, phenol, and halogenated phenol; sulfone-based solvents, such as sulfolane; and dimethylsulfoxide (DMSO).

Of these organic solvents, in view of high solubility, high reaction acceleration property and the like, amide-based solvents, phenol-based solvents, and urea-based solvents are preferred; and in view of a solvent without a hydrogen atom that is apt to inhibit a crosslinking reaction due to heating, amide-based solvents, phenol-based solvents, urea-based solvents, and dimethylsulfoxide are preferred; amide-based solvents and dimethylsulfoxide are particularly preferred.

The resin varnish to be used in the present invention may contain various additives, within the range in which the characteristics are not affected, such as a cell nucleating agent, an antioxidant, an antistatic agent, an ultraviolet radiation inhibitor, a light stabilizer, a fluorescent whitening agent, a pigment, a dye, a compatibilizer, a lubricant, a reinforcing agent, a flame retardant, a crosslinking agent, a crosslinking coagent, a plasticizer, a thickening agent, a viscosity reducer, and an elastomer. Moreover, a layer formed of the resin containing any of these additives may be laminated on the resultant insulated wire, or the insulated wire may be coated with a coating material containing any of these additives.

In order to improve an elastic modulus of the thermosetting resin layer, the resin varnish may be baked, after powder having a high aspect ratio, such as glass fibers or carbon nanotubes, is added to the coating material. The powder is aligned in a direction of flowing of the wire in working in such a manner, and the elastic modulus in a bending direction is reinforced.

The method of coating the resin varnish may be in a usual manner. Examples of the coating method include: a method of employing a die for varnish coating, which has been manufactured so as to be similar to the shape of the conductor; and a method of employing a die that is called "universal die", which has been formed in a curb shape when the cross-sectional shape of the conductor is quadrangular. The conductor having the resin varnish containing enameled resin coated thereon, is baked by a baking furnace in a usual manner. Although specific baking conditions depend on the shape of a furnace to be used, in the case where the furnace is an about 5 m-sized vertical furnace by natural convection, the baking can be achieved by setting the passing time period to 10 to 90 sec at the furnace temperature of 400 to 500°C.

<Method of producing the insulated wire>

The method of producing the insulated wire of the present invention refers to the method of producing the insulated wire having at least one layer of the electrical wire coating, including the extrusion covering resin layer, on the outer periphery of the conductor as described above.

That is, in the insulated wire obtained by the production method of the present invention, the extrusion covering resin layer is composed of the mixed resin of the resin (A) and the resin (B) each having different relative permittivity; the resin (A) is the polyallyletherketone resin including at least one resin selected from polyetheretherketone, polyetherketoneketone, polyetherketone, polyetheretherketoneketone, polyetherketoneetherketoneketone, and polyketone; and the resin (B) is the non-fluorine-based resin including at least one resin selected from polycarbonate, polyphenysulfone, and polyethersulfone; and having lower relative permittivity at 200°C, than the resin (A); the mixing mass ratio of the mixed resin (a mass of the resin (A):a mass of the resin (B)) is from 90:10 to 51:49; and, in the relative permittivity of the whole of the electrical wire coating, the value of the ratio of the relative permittivity at 200°C to the relative permittivity at 25°C and 50% relative humidity, is less than 1.20.

In the insulated wire obtained by the production method of the present invention, as the electrical wire coating, other insulation layers may be arranged, in addition to the above-described extrusion covering resin layer. For example, in order to improve adhesion between the conductor and the extrusion covering resin layer, a thermosetting resin layer (also referred to as enameled layer in this case) is preferably provided.

In addition, with regard to details of individual layers, the description on the extrusion covering resin layer and the thermosetting resin layer in the insulated wire of the present invention, is preferably applied to.

Moreover, the method of producing the insulated wire of the present invention includes, for example, a step of extruding the resin composition containing the above-mentioned mixed resin, on the outer periphery of the conductor, to form the above-described extrusion covering resin layer.

Details of the method of forming the individual layers are as described in the extrusion covering resin layer and the thermosetting resin layer.

<Use>

The insulated wire of the present invention is applicable to a field which requires resistance to voltage and heat resistance, such as various kinds of electric equipment. For example, the insulated wire of the present invention is used for a motor, a transformer, and the like, which can compose high-performance electric equipment by being processed into a coil. In particular, the insulated wire is preferably used as a winding wire for a driving motor of HV (hybrid vehicles) and EV (electrical vehicles). As just described, the present invention can provide electronic or electric equipment, particularly a driving motor of HV and EV, equipped with a coil formed by winding the insulated wire. Meanwhile, in the case where the insulated wire of the present invention is used for a motor coil, it is also called an insulated wire for the motor coil.

In particular, the insulated wire can be preferably used as an insulated winding wire for the electric or electrical equipment, particularly for the driving motor in HV and EV, in which the temperature will reach a level over 200°C.

EXAMPLES

The present invention will be described in more detail based on examples given below, but the invention is not meant to be limited by these.

Examples 1-5, 8-11, 14-19 are embodiments according to the invention, whereas examples 6, 7, 12, and 13 do not form part of the present invention.

Example 1

According to the following manners, an insulated wire as an embodiment shown in Fig. 1 was produced.

There was provided a rectangular conductor in size 1.8 mm $\times$ 3.3 mm (thickness $\times$ width), curvature radius of chamfered corners at four corners r = 0.3mm (copper having an oxygen content of 15 ppm). In the formation of a thermosetting resin layer, use was made of: a die having a shape similar to a shape of the conductor. A 5 $\mu$m-thick enameled layer was formed by coating a polyamideimide (PAI) resin varnish (manufactured by Hitachi Chemical Co., Ltd.; trade name HI406) on the conductor, followed by passing the resultant coated conductor through a baking furnace set at a furnace temperature of 450°C and having a furnace length of 8 m, at a speed at which a baking time became 15 seconds, to conduct one baking step. By repeating this operation for six (6) times, there was obtained a 30 $\mu$m-thick thermosetting resin layer (enameled layer), thereby for obtaining a 30 $\mu$m-thick in covered layer, enameled wire.

The enameled wire obtained was applied as a core wire, and an extrusion covering resin layer was formed outside this thermosetting resin layer.

As resins to be subjected to extrusion covering, uses were made of: polyetheretherketone (PEEK) (trade name: KetaSpire KT-880, relative permittivity at 25°C: 3.2, relative permittivity at 200°C: 4.5, manufactured by Solvay Specialty Polymers Japan K.K.); and PC (trade name: CALIBRE 300-10, relative permittivity at 25°C: 3.0, relative permittivity at 200°C: 3.0, manufactured by Sumika Styron Polycarbonate Limited).

As a screw of an extruder, a 30 mm full-flight screw, in which L/D = 20 was used, and in which a compression ratio was set to 3. Extrusion temperature conditions were set to C1: 300°C, C2: 370°C, C3: 380°C, H: 390°C, D: 390°C, respectively. Herein, C1, C2, and C3 represent temperatures of a cylinder in the extruder to sequentially indicate temperatures of three (3) zones from a raw material-resin charging side. Moreover, H represents a temperature of a head part, and D represents a temperature of a die part.

A 170 $\mu$m-thick extrusion covering resin layer was formed, by performing extrusion covering of the above-described resin, by using the extrusion die, and then performing water-cooling at an interval of time period of 10 seconds, to obtain the insulated wire having the extrusion covering resin layer composed of the mixed resin of PEEK and PC on the enameled wire, and having 200 $\mu$m in a total thickness (a total of a thickness of the thermosetting resin layer and a thickness of the extrusion covering resin layer).

Examples 2 to 13

Insulated wires were obtained in the same manner as in Example 1, except that kinds and a mixing ratio of resins to be used in the extrusion covering resin layer were changed as shown in Tables 1 and 2.

Example 14

An insulated wire in Example 14 was obtained in the same manner as in Example 1, except that kinds and a mixing ratio of resins to be used in the extrusion covering resin layer were changed as shown in Table 2 below, and that a thickness of the extrusion covering resin layer was changed to 25 μm.

Example 15

An insulated wire in Example 15 was obtained in the same manner as in Example 1, except that kinds and a mixing ratio of resins to be used in the extrusion covering resin layer were changed as shown in Table 2 below, and that a thickness of the extrusion covering resin layer was changed to 100 μm.

Example 16

An insulated wire in Example 16 was obtained in the same manner as in Example 1, except that kinds and a mixing ratio of resins to be used in the extrusion covering resin layer were changed as shown in Table 2 below, that the conductor to be used was changed to a bare wire without the thermosetting resin layer (the enameled layer), and that a thickness of the extrusion covering resin layer was changed to 200 μm.

Examples 17 to 19

Insulated wires were obtained in the same manner as in Example 1, except that kinds and a mixing ratio of resins to be used in the extrusion covering resin layer were changed as shown in Table 3.
In addition, as PC, TPI, PPSU, PES, and PEI for the resin (B), the following resins were used:

• PC
Polycarbonate (trade name: CALIBRE 300-10, relative permittivity at 25°C: 3.0, relative permittivity at 200°C: 3.0, manufactured by Sumika Styron Polycarbonate Limited);
• TPI
Thermoplastic polyimide (trade name: AURUM PL450C, relative permittivity at 25°C: 3.1, relative permittivity at 200°C: 3.1, manufactured by Mitsui Chemicals, Inc.)
• PPSU
Polyphenylsulfone (trade name: Radel R-5800, relative permittivity at 25°C: 3.45, relative permittivity at 200°C: 3.6, manufactured by Solvay Specialty Polymers Japan K.K.);
• PES
Polyethersulfone (trade name: Sumikaexcel 4100G, relative permittivity at 25°C: 3.5, relative permittivity at 200°C: 3.5, manufactured by Sumitomo Chemical Co., Ltd.)
• PEI
Polyetherimide (trade name: ULTEM 1000, relative permittivity at 25°C: 3.1, relative permittivity at 200°C: 3.1, manufactured by SABIC Innovative Plastics Holding BV)

Comparative Example 1

An insulated wire in Comparative Example 1 was obtained in the same manner as in Example 1, except that kinds and a mixing ratio of resins to be used in the extrusion covering resin layer were changed as shown in Table 4.

Comparative Examples 2 to 6

Insulated wires in Comparative Examples 2 to 6 were obtained in the same manner as in Example 1, except that kinds and a mixing ratio of resins to be used in the extrusion covering resin layer were changed as shown in Table 4.

Comparative Example 7

An insulated wire in Comparative Example 7 was obtained in the same manner as in Example 1, except that kinds and a mixing ratio of resins to be used in the extrusion covering resin layer were changed as shown in Table 4 below, and that a thickness of the extrusion covering resin layer was changed to 25 μm.
The following evaluation in the items was made on each insulated wire prepared as described above.

(Relative permittivity)

1) Relative permittivity of the single resin of the resins (A) and (B) each forming the extrusion covering resin layer

Measurements were carried out as described below.

Each sample of the respective single resin is molded into a sheet form by a heat press machine, and relative permittivity of the single resin was measured in accordance with JIS C 2138: 2007.

In addition, with regard to the measurement, samples at 25°C and 200°C were each measured, by using LCR HiTester (model: 3532-50, manufactured by Hioki E.E. Corporation).

2) Relative permittivity of the mixed resin forming the extrusion covering resin layer

Relative permittivity of the mixed resin was measured, by molding a sample of each mixed resin into a sheet form by a hot press machine in the same manner as in the method in the above-described 1), and in accordance with JIS C 2138: 2007.

In addition, with regard to the measurement, samples at 25°C and 200°C were each measured, by using LCR HiTester (model: 3532-50, manufactured by Hioki E.E. Corporation).

3) Relative permittivity of the whole of the electrical wire coating (the insulation coating)

Measurements were carried out as described below, by using the insulated wires as prepared in Examples 1 to 19 and Comparative Examples 1 to 7.

First, the electrostatic capacitance of the insulated wires each was measured at 25°C and 200°C, by using LCR HiTester (model: 3532-50, manufactured by Hioki E.E. Corporation). Relative permittivity at 25°C and 200°C each was calculated, from the electrostatic capacitance obtained, and the outside diameters of the conductor and the insulated wire, based on the following formula.

$$\varepsilon r = Cp \cdot Log(b/a)/(2\pi\varepsilon_0)$$

Herein, $\varepsilon r$ denotes relative permittivity of the whole of the electrical wire coating (the insulation coating), Cp denotes the electrostatic capacitance [pF/m] per unit length, a denotes the outside diameter of the conductor, b denotes the outside diameter of the insulated wire, and $\varepsilon_0$ denotes the permittivity ($8.855 \times 10^{-12}$ [F/m]) in vacuum, respectively. Hereinafter, the electrical wire coating is also referred to as the insulation coating.

(Percent elongation at breakage)

Percent elongation at breakage of the resins to be used in the extrusion covering resin layer was evaluated as described below.

A sheet was prepared, by performing compression molding of the resin(s) to be used in the extrusion covering resin layer into a thickness of 0.15 mm, by a hot press machine. A test specimen was prepared, by punching the sheet obtained into a dumbbell piece (IEC-S type). A tensile test was conducted at a tensile speed of 20 m/min, by using, for the measurement, a tensile tester (trade name: AGS-J, manufactured by Shimadzu Corporation). An average value of percent elongation at breakage between gauge marks was measured in a test in which the number of tests is 5 (n=5) by adjusting a gauge length to 20 mm, and evaluation was made based on the following criteria.

A case where the percent elongation at breakage was 50% or more and 500% or less was deemed to pass the test, and expressed by "A"; and a case where the value was out of the above-described range was deemed not to pass the test, and expressed by "C."

(Thermal aging resistance (200°C))

Thermal aging resistance was evaluated as described below.

With reference to "3. Thermal shock resistance (applied to enameled wires and tape winding wires)" in JIS C 3216-6 "Winding wires-test method - Part 1: General)," whether or not cracks were generated in the thermosetting resin layer and the extrusion covering resin layer was confirmed with the naked eyes, immediately after each insulated wire which was elongated by 1% in a length direction, was allowed to stand in a thermostatic bath at 200°C for 500 hours.

Herein, with regard to confirmation of the cracks in the thermosetting resin layer, the extrusion covering resin layer was peeled off and the cracks were confirmed, and with regard to confirmation of the cracks in the extrusion covering resin layer, a surface of the insulated wire per se taken out from the thermostatic bath was directly observed.

A case where the cracks were not confirmed in both the thermosetting resin layer and the extrusion covering resin layer was deemed to pass the test, and expressed by "A"; a case where layer cracks were confirmed in either the thermosetting resin layer or the extrusion covering resin was expressed by "B"; and a case where the layer cracks were confirmed in both the thermosetting resin layer and the extrusion covering resin layer was expressed by "C." "B" and "C" are deemed not to pass the test.

(Measurement of a lowering ratio at 200°C in partial discharge inception voltage (PDIV))

PDIV was evaluated as described below.

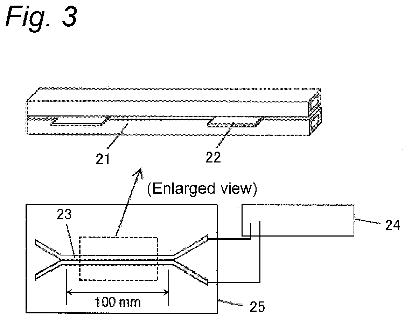

The following one was taken as a test specimen, which was obtained; by arranging flat faces of two rectangular wires in parallel to each other, as shown in Fig. 3, followed by fixing the wires by a plastic clip. A parallel flat plate-shaped air gap was formed between the electric wires by interposing a 50 μm-thick insulating spacer therebetween. An effective length of the test specimen was about 100 mm. This test specimen was placed in a constant temperature and humidity chamber in which temperature and humidity were controlled, and a voltage when a discharge electric charge amount was over 10 pC by applying an AC voltage having 50 Hz sine wave thereto, was taken as PDIV. A boosting speed was adjusted to 50 V/s, and KPD 2050 (trade name, manufactured by Kikusui Electronics Corporation) was used for detection of partial discharge. The measurement was carried out under two kinds of conditions of a temperature of 25°C, 50% relative humidity, and a temperature of 200°C.

With regard to judgment, a case where PDIV at the temperature of 200°C was lowered by 30% or more relative to PDIV at the temperature of 25°C and 50% relative humidity was deemed not to pass the test, and expressed by "C"; and a case where PDIV was lowered by a level less than 30% was deemed to pass the test, and expressed by "A."

The results obtained were collectively described in the following Tables 1 to 4.

Table 1

| | | | Ex 1 | Ex 2 | Ex 3 | Ex 4 | Ex 5 | Ex 6 | Ex 7 | Ex 8 |
|---|---|---|---|---|---|---|---|---|---|---|
| Thickness of insulation coating [μm] | Thermosetting resin layer | | 30 | 30 | 30 | 30 | 30 | 30 | 30 | 30 |
| | Extrusion covering resin layer | | 170 | 170 | 170 | 170 | 170 | 170 | 170 | 170 |
| Resin (A) | PEEK | mass parts | 90 | 70 | 51 | - | - | 90 | 51 | 90 |
| | PEK | mass parts | - | - | - | 90 | 51 | - | - | - |
| Resin (B) | PC | mass parts | 10 | 30 | 49 | 10 | 49 | - | - | - |
| | TPI | mass parts | - | - | - | - | - | 10 | 49 | - |
| | PPSU | mass parts | - | - | - | - | - | - | - | 10 |
| | PES | mass parts | - | - | - | - | - | - | - | - |
| | PEI | mass parts | - | - | - | - | - | - | - | - |
| Mixing mass ratio | Resin (A):resin (B) | | 90: 10 | 70: 30 | 51: 49 | 90: 10 | 51: 49 | 90: 10 | 51: 49 | 90: 10 |
| Relative permittivity of whole of insulation coating εr at 200 ° C | | | 3.95 | 3.80 | 3.65 | 3.90 | 3.55 | 3.95 | 3.70 | 4.00 |
| Relative permittivity ratio of whole of insulation coating εr at 200°C/εr at 25°C | | | 1.18 | 1.15 | 1.11 | 1.16 | 1.10 | 1.18 | 1.12 | 1.19 |
| Performance evaluation | Percent elongation at breakage | | A | A | A | A | A | A | A | A |
| | Thermal aging resistance | | A | A | A | A | A | A | A | A |
| | Partial discharge inception voltage: lowering ratio at 200°C | | A | A | A | A | A | A | A | A |
| Remarks: 'Ex' means Example according to this invention. The same will be applied to in below. | | | | | | | | | | |

Table 2

| | | | Ex 9 | Ex 10 | Ex 11 | Ex 12 | Ex 13 | Ex 14 | Ex 15 | Ex 16 |
|---|---|---|---|---|---|---|---|---|---|---|
| Thickness of insulation coating [μm] | Thermosetting resin layer | | 30 | 30 | 30 | 30 | 30 | 30 | 30 | 0 |
| | Extrusion covering resin layer | | 170 | 170 | 170 | 170 | 170 | 25 | 100 | 200 |
| Resin (A) | PEEK | mass parts | 51 | 90 | 51 | 90 | 51 | 70 | 70 | 70 |
| | PEK | mass parts | - | - | - | - | - | - | - | - |
| Resin (B) | PC | mass parts | - | - | - | - | - | 30 | 30 | 30 |
| | TPI | mass parts | - | - | - | - | - | - | - | - |
| | PPSU | mass parts | 49 | - | - | - | - | - | - | - |
| | PES | mass parts | - | 10 | 49 | - | - | - | - | - |
| | PEI | mass parts | - | - | - | 10 | 49 | - | - | - |
| Mixing mass ratio | Resin (A):resin (B) | | 51:49 | 90:10 | 51:49 | 90:10 | 51:49 | 70:30 | 70:30 | 70:30 |
| Relative permittivity of whole of insulation coating εr at 200°C | | | 3.80 | 4.00 | 3.80 | 3.90 | 3.55 | 3.95 | 3.85 | 3.75 |
| Relative permittivity ratio of whole of insulation coating εr at 200°C/εr at 25°C | | | 1.15 | 1.19 | 1.14 | 1.17 | 1.10 | 1.08 | 1.12 | 1.19 |
| Performance evaluation | Percent elongation at breakage | | A | A | A | A | A | A | A | A |
| | Thermal aging resistance | | A | A | A | A | A | A | A | A |
| | Partial discharge inception voltage: lowering ratio at 200°C | | A | A | A | A | A | A | A | A |

Table 3

| | | | Ex 17 | Ex 18 | Ex 19 |
|---|---|---|---|---|---|
| Thickness of insulation coating [μm] | Thermosetting resin layer | | 30 | 30 | 30 |
| | Extrusion covering resin layer | | 170 | 170 | 170 |
| Resin (A) | PEEK | mass parts | 70 | 70 | 70 |
| | PEK | mass parts | - | - | - |
| Resin (B) | PC | mass parts | 15 | 15 | 15 |
| | TPI | mass parts | - | - | - |
| | PPSU | mass parts | 15 | - | - |
| | PES | mass parts | - | 15 | - |
| | PEI | mass parts | - | - | 15 |
| Mixing mass ratio | Resin (A):resin (B) | | 70:30 | 70:30 | 70:30 |
| Relative permittivity of whole of insulation coating εr at 200°C | | | 3.90 | 3.90 | 3.75 |
| Relative permittivity ratio of whole of insulation coating εr at 200°C/εr at 25°C | | | 1.17 | 1.17 | 1.14 |
| Performance evaluation | Percent elongation at breakage | | A | A | A |
| | Thermal aging resistance | | A | A | A |
| | Partial discharge inception voltage: lowering ratio at 200°C | | A | A | A |

Table 4

| | | | CEx 1 | CEx 2 | CEx 3 | CEx 4 | CEx 5 | CEx 6 | CEx 7 |
|---|---|---|---|---|---|---|---|---|---|
| Thickness of insulation coating [μm] | Thermosetting resin layer | | 30 | 30 | 30 | 30 | 30 | 30 | 30 |
| | Extrusion covering resin layer | | 170 | 170 | 170 | 170 | 170 | 170 | 25 |
| Resin (A) | PEEK | mass parts | 100 | 40 | 40 | 40 | 40 | 40 | 40 |
| | PEK | mass parts | - | - | - | - | - | - | - |
| Resin (B) | PC | mass parts | - | 60 | - | - | - | - | 60 |
| | TPI | mass parts | - | - | 60 | - | - | - | - |
| | PPSU | mass parts | - | - | - | 60 | - | - | - |
| | PES | mass parts | - | - | - | - | 60 | - | - |
| | PEI | mass parts | - | - | - | - | - | 60 | - |
| Mixing mass ratio | Resin (A):resin (B) | | 100:0 | 40:60 | 40:60 | 40:60 | 40:60 | 40:60 | 40:60 |
| Relative permittivity of whole of insulation coating εr at 200°C | | | 4.00 | 3.55 | 3.60 | 3.75 | 3.75 | 3.50 | 3.80 |
| Relative permittivity ratio of whole of insulation coating εr at 200°C/εr at 25°C | | | 1.20 | 1.13 | 1.11 | 1.14 | 1.13 | 1.09 | 1.06 |
| Performance evaluation | Percent elongation at breakage | | A | C | C | C | C | C | C |
| | Thermal aging resistance | | A | C | C | C | C | C | C |
| | Partial discharge inception voltage: lowering ratio at 200°C | | C | A | A | A | A | A | A |
| Remarks: 'CEx' means Comparative Example. | | | | | | | | | |

As is obvious from Examples 1 to 3 and 6 to 13 in Tables 1 and 2, it was found that the value of the ratio of the relative permittivity can be lowered, while suppressing lowering of the percent elongation at breakage and the thermal aging resistance, in the insulated wires using the extrusion covering resin layers having the compositions in which 10 to 49 parts by mass of PC, TPI, PPSU, PES, or PEI were blended with PEEK. Moreover, as is obvious from Examples 17 to 19 in Table 3, it was found that, even when two kinds of resins selected from PC, TPI, PPSU, PES, and PEI were blended with PEEK, the value of the ratio of the relative permittivity can be lowered, while suppressing lowering of the percent elongation at breakage and the thermal aging resistance. In the similar manner, from Examples 4 and 5 in Table 1, if was found that, even when 10 to 49 parts by mass of PC were blended with PEK, the value of the ratio of the relative permittivity can be lowered, while suppressing lowering of the percent elongation at breakage and the thermal aging resistance.

Moreover, from comparison of Example 2 with Examples 15 and 14, it was found that, even when the film thickness of the extrusion covering resin layer is lowered, although the relative permittivity at 200°C in the whole of the insulation coating is increased, the relative permittivity is still kept within the practical range. Furthermore, it was found to be preferable that, although the partial discharge inception voltage (PDIV) is originally lowered as a film thickness of the resin coating is made to be thinned, a rise of the relative permittivity in association with a temperature change is small, in which the value of the ratio of the relative permittivity at 200°C to the relative permittivity at 25°C in the whole of the insulation coating is lowered to 1.15, 1.12, or 1.08 as the thickness of the extrusion covering resin layer is made to be thinned to 170 μm, 100 μm, or 25 μm.

Further, from Example 16, it was found that, even when the wire has no thermosetting resin layer, the value of the ratio of the relative permittivity in the whole of the insulation coating can be lowered to a level at which PDIV at a high temperature is not excessively lowered, while suppressing lowering of the percent elongation at breakage and the thermal aging resistance in the same manner.

In contrast, from Comparative Example 1 in Table 4, it is found that, when the resin (B) was not added thereto, the value of the ratio of the relative permittivity at 200°C to the relative permittivity at 25°C in the insulation coating becomes 1.20 or more, and as a result, the partial discharge inception voltage (PDIV) at 200°C is lowered by 30% or more relative to PDIV at 25°C, in which PDIV is significantly lowered at 200°C.

Moreover, from Comparative Examples 2 to 6, it was found that, when 60 parts by mass of PC, TPI, PPSU, PES, or PEI was added thereto, the percent elongation at breakage is lowered to a level less than the tolerable lower limit, and the thermal aging resistance is also lowered to an undesirable level as the insulated wire for an electronic equipment to be used in a high temperature environment.

Furthermore, from Comparative Example 7, it was found that, even in a case where the film thickness of the extrusion covering resin layer is made to be thinned, when 60 parts by mass of PC is added thereto, the percent elongation at breakage is lowered to the level less than the tolerable lower limit, and the thermal aging resistance is also lowered to the undesirable level as the insulated wire for the electronic equipment to be used in the high temperature environment.

In addition, as in Comparative Example 7, if the film thickness of the extrusion covering resin layer is made to be thinned, the relative permittivity at 200°C in the thermosetting resin layer is not substantially unchanged from the relative permittivity at 25°C, and therefore the value of the ratio of the relative permittivity is improved toward a level near 1.00, but a problem occurs in the thermal aging resistance.

In contrast, as in Example 14, various performances were able to be simultaneously satisfied, by setting the composition to any of the compositions as specified in the present invention.

From the above-described results, it is found that the insulated wire of the present invention can be preferably applied obviously to ordinary electrical equipment, and also: to the insulated wire, in which, even at such a high temperature over 200°C, inverter surge deterioration is suppressed, in which mechanical properties are excellent, and in which thermal deterioration is suppressed; to a coil using this insulated wire; and to an electric or electronic equipment using the coil.

Moreover, according to the method of producing the insulated wire of the present invention, the insulated wire having the above-described excellent performance was able to be produced.

REFERENCE SIGNS LIST

1 Insulated wire
11 Conductor
12 Thermosetting resin layer
13 Extrusion covering resin layer
21 Insulated wire (rectangular wire)
22 Insulated spacer
23 Test specimen
24 PDIV tester (applicable to AC voltage with 50 Hz)
25 Constant temperature and humidity chamber (25°C, 50% relative humidity)

**Claims**

1. An insulated wire, comprising at least one layer of an electrical wire coating, including an extrusion covering resin layer, on an outer periphery of a conductor, wherein
the extrusion covering resin layer is composed of a mixed resin of a resin (A) and a resin (B) each having different relative permittivity,
the resin (A) is a polyallyletherketone resin including at least one resin selected from polyetheretherketone, polyetherketoneketone, polyetherketone, polyetheretherketoneketone, polyetherketoneetherketoneketone, and polyketone,
the resin (B) is a non-fluorine-based resin including at least one resin selected from polycarbonate, polyphenylsulfone, and polyethersulfone; and having lower relative permittivity at 200°C, than the resin (A);
a mixing mass ratio of the mixed resin (a mass of the resin (A) : a mass of the resin (B)) is 90:10 to 51:49, and
a value of a ratio of the relative permittivity at 200°C to the relative permittivity at 25°C and 50% relative humidity, in the relative permittivity of a whole of the electrical wire coating, is less than 1.20.

2. The insulated wire as claimed in claim 1, wherein percent elongation at breakage of a resin(s) in the extrusion covering resin layer is 50% or more.

3. The insulated wire as claimed in claim 1 or 2, wherein the electrical wire coating comprises a thermosetting resin layer including at least one resin selected from polyimide, polyamideimide, polyesterimide, polyetherimide, and H-class polyester.

**4.** A coil, wherein the insulated wire as claimed in any one of claims 1 to 3 is subjected to winding working.

**5.** An electric or electronic equipment, using the coil as claimed in claim 4.

**6.** A method of producing an insulated wire, comprising at least one layer of an electrical wire coating, including an extrusion covering resin layer, on an outer periphery of a conductor, wherein
the extrusion covering resin layer is composed of a mixed resin of a resin (A) and a resin (B) each having different relative permittivity,
the resin (A) is a polyallyletherketone resin including at least one resin selected from polyetheretherketone, polyetherketoneketone, polyetherketone, polyetheretherketoneketone, polyetherketoneetherketoneketone, and polyketone,
the resin (B) is a non-fluorine-based resin including at least one resin selected from polycarbonate, polyphenylsulfone, and polyethersulfone; and having lower relative permittivity at 200°C, than the resin (A);
a mixing mass ratio of the mixed resin (a mass of the resin (A):a mass of the resin (B)) is 90:10 to 51:49, and
a value of a ratio of the relative permittivity at 200°C to the relative permittivity at 25°C and 50% relative humidity, in the relative permittivity of a whole of the electrical wire coating, is less than 1.20, wherein
the method comprises: a step of extruding a resin composition, including the mixed resin, on an outer periphery of the conductor, to form the extrusion covering resin layer.

**7.** The method of producing the insulated wire as claimed in claim 6, wherein percent elongation at breakage of a resin(s) in the extrusion covering resin layer is 50% or more.

**8.** The method of producing the insulated wire as claimed in claim 6 or 7, comprising: a step of forming a thermosetting resin layer including at least one resin selected from polyimide, polyamideimide, polyesterimide, polyetherimide, and H-class polyester, on an outer periphery of the conductor.

**Patentansprüche**

**1.** Isolierter Draht, umfassend mindestens eine Schicht einer Beschichtung eines elektrischen Drahtes, einschließlich einer extrusionsbedeckenden Harzschicht, an einem Außenumfang eines Leiters, worin
die extrusionsbedeckende Harzschicht zusammengesetzt ist aus einem gemischten Harz aus einem Harz (A) und einem Harz (B) mit jeweils unterschiedlicher relativer Permittivität,
das Harz (A) ein Polyallyletherketonharz ist, das mindestens ein Harz enthält, das ausgewählt ist aus Polyetheretherketon, Polyetherketonketon, Polyetherketon, Polyetheretherketonketon, Polyetherketonetherketonketon und Polyketon,
das Harz (B) ein Harz ist, das nicht auf Fluor basiert, das mindestens ein Harz enthält, das aus Polycarbonat, Polyphenylsulfon und Polyethersulfon ausgewählt ist; und eine niedrigere relative Permittivität bei 200 °C als das Harz (A) aufweist;
ein Mischmassenverhältnis des gemischten Harzes (Masse des Harzes (A): Masse des Harzes (B)) 90:10 bis 51:49 beträgt und der Wert des Verhältnisses der relativen Permittivität bei 200 °C zur relativen Permittivität bei 25 °C und 50% relativer Luftfeuchtigkeit in der relativen Permittivität der gesamten elektrischen Drahtbeschichtung weniger als 1,20 beträgt.

**2.** Isolierter Draht nach Anspruch 1, wobei die prozentuale Bruchdehnung eines Harzes (von Harzen) in der extrusionsbedeckenden Harzschicht 50% oder mehr beträgt.

**3.** Isolierter Draht nach Anspruch 1 oder 2, wobei die Beschichtung des elektrischen Drahtes eine wärmehärtende Harzschicht umfasst, die mindestens ein Harz enthält, das aus Polyimid, Polyamidimid, Polyesterimid, Polyetherimid und Polyester der H-Klasse ausgewählt ist.

**4.** Spule, wobei der isolierte Draht nach einem der Ansprüche 1 bis 3 einer Wicklungsbearbeitung unterzogen wird.

**5.** Elektrische oder elektronische Vorrichtung, bei der die Spule nach Anspruch 4 verwendet wird.

**6.** Verfahren zur Herstellung eines isolierten Drahtes, umfassend mindestens eine Schicht einer Beschichtung eines elektrischen Drahtes, einschließlich einer extrusionsbedeckenden Harzschicht, an einem Außenumfang eines Leiters, worin die extrusionsbedeckende Harzschicht zusammengesetzt ist aus einem gemischten Harz aus einem Harz (A) und einem Harz (B) mit jeweils unterschiedlicher relativer Permittivität,

das Harz (A) ein Polyallyletherketonharz ist, das mindestens ein Harz enthält, das ausgewählt ist aus Polyetheretherketon, Polyetherketonketon, Polyetherketon, Polyetheretherketonketon, Polyetherketonetherketonketon und Polyketon,

das Harz (B) ein Harz ist, das nicht auf Fluor basiert, das mindestens ein Harz enthält, das aus Polycarbonat, Polyphenylsulfon und Polyethersulfon ausgewählt ist; und eine niedrigere relative Permittivität bei 200 °C als das Harz (A) aufweist;

ein Mischmassenverhältnis des gemischten Harzes (Masse des Harzes (A): Masse des Harzes (B)) 90:10 bis 51:49 beträgt, und Wert des Verhältnisses der relativen Permittivität bei 200 °C zur relativen Permittivität bei 25 °C und 50% relativer Luftfeuchtigkeit in der relativen Permittivität der gesamten elektrischen Drahtbeschichtung weniger als 1,20 beträgt, wobei das Verfahren umfasst: einen Schritt des Extrudierens einer Harzzusammensetzung, einschließlich des gemischten Harzes, an einem Außenumfang des Leiters, um die extrusionsbedeckende Harzschicht zu bilden.

**7.** Verfahren zur Herstellung des isolierten Drahtes nach Anspruch 6, wobei die prozentuale Bruchdehnung eines Harzes (von Harzen) in der extrusionsbedeckenden Harzschicht 50% oder mehr beträgt.

**8.** Verfahren zur Herstellung des isolierten Drahtes nach Anspruch 6 oder 7, umfassend: einen Schritt zum Bilden einer duroplastischen Harzschicht mit mindestens einem Harz, ausgewählt aus Polyimid, Polyamidimid, Polyesterimid, Polyetherimid und Polyester der H-Klasse, an einem Außenumfang des Leiters.

**Revendications**

**1.** Fil isolé, comprenant au moins une couche d'un revêtement de fil électrique, comprenant une couche de résine de recouvrement par extrusion sur une périphérie externe d'un conducteur, dans lequel

la couche de résine de recouvrement par extrusion est composée d'une résine mélangée d'une résine (A) et d'une résine (B) ayant chacune une permittivité relative différente,

la résine (A) est une résine polyallyléthercétone comprenant au moins une résine choisie parmi la polyétheréthercétone, la polyéthercétonecétone, la polyéthercétone, la polyétheréthercétonecétone, la polyéthercétoneéthercétonecétone et la polycétone,

la résine (B) est une résine non à base de fluor comprenant au moins une résine choisie parmi le polycarbonate, la polyphénylsulfone et la polyéthersulfone; et ayant une permittivité relative plus faible à 200 °C que la résine (A);

un rapport massique de mélange de la résine mélangée (masse de résine (A): masse de résine (B)) est de 90:10 à 51:49, et

une valeur d'un rapport de la permittivité relative à 200 °C à la permittivité relative à 25 °C et 50% d'humidité relative, dans la permittivité relative de l'ensemble du revêtement de fil électrique, est inférieure à 1,20.

**2.** Fil isolé selon la revendication 1, dans lequel le pourcentage d'allongement à la rupture d'une ou plusieurs résine (s) dans la couche de résine de recouvrement par extrusion est de 50% ou plus.

**3.** Fil isolé selon la revendication 1 ou 2, dans lequel le revêtement de fil électrique comprend une couche de résine thermodurcissable comprenant au moins une résine choisie parmi le polyimide, le polyamideimide, le polyesterimide, le polyétherimide et le polyester de classe H.

**4.** Bobine, dans laquelle le fil isolé selon l'une quelconque des revendications 1 à 3 est soumis à un travail d'enroulement.

**5.** Equipement électrique ou électronique, utilisant la bobine selon la revendication 4.

**6.** Procédé de production d'un fil isolé, comprenant au moins une couche d'un revêtement de fil électrique, comprenant une couche de résine de recouvrement par extrusion, sur une périphérie externe d'un conducteur, dans lequel la couche de résine de recouvrement par extrusion est composée d'une résine mélangée d'une résine (A) et d'une résine (B) ayant chacune une permittivité relative différente,

la résine (A) est une résine polyallyléthercétone comprenant au moins une résine choisie parmi la polyétheréthercétone, la polyéthercétoncétone, la polyéthercétone, la polyétheréthercétonecétone, la polyéthercétoneéthercétonecétone et la polycétone la résine (B) est une résine non à base de fluor comprenant au moins une résine choisie parmi le polycarbonate, la polyphénylsulfone et la polyéthersulfone; et ayant une permittivité relative plus faible à 200 °C que la résine (A); un rapport massique de mélange de la résine mélangée (masse de résine (A): masse de résine (B)) est de 90:10 à 51:49, et une valeur d'un rapport de la permittivité relative à 200 °C à la permittivité relative à 25 °C et 50% d'humidité relative, dans la permittivité relative de l'ensemble du revêtement de fil électrique, est inférieure à 1,20, dans laquelle le procédé comprend: une étape d'extrusion d'une composition de résine, comprenant la résine mélangée, sur une périphérie externe du conducteur, pour former la couche de résine de recouvrement par extrusion.

7. Procédé de production du fil isolé selon la revendication 6, dans lequel le pourcentage d'allongement à la rupture d'une ou plusieurs résine (s) dans la couche de résine de recouvrement par extrusion est de 50% ou plus.

8. Procédé de production du fil isolé selon la revendication 6 ou 7, comprenant: une étape de formation d'une couche de résine thermodurcissable comprenant au moins une résine choisie parmi le polyimide, le polyamideimide, le polyesterimide, le polyétherimide et le polyester de classe H, sur une périphérie externe du conducteur.

## Fig. 1

## Fig. 2

Temperature dependence of relative permittivity of PEEK

*Fig. 3*

(Enlarged view)

23

100 mm

21    22

24

25

**EP 3 193 339 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5391324 B
- JP 2013109874 A
- WO 2013088968 A
- WO 2014122828 A1